# EUROPEAN PATENT APPLICATION

(11) **EP 1 054 545 A2**
(43) Date of publication of application: **22.11.2000**
(21) Application number: 00302452.8
(22) Date of filing: 24.03.2000
(51) Int. Cl.: H04L 29/06, H04L 12/22

(54) **Method and apparatus for authenticating users on a network**

(30) Priority: 11.05.1999 US 310005
(71) Applicant: AT&T Corp., New York, NY 10013-2412 (US)
(72) Inventor: Datar, Rajendra, Hunterdon County, New Jersey 08809 (US); Hurley, Daniel F., Monmouth County, New Jersey 07746 (US); Prasad, Vishwa, Middlesex County, New Jersey 07747 (US)
(74) Representative: Asquith, Julian Peter

(57) **Abstract**

A user (12) obtains an electronic credential (14) through a network (18) by first requesting such a credential from a certificate authority (16) which, in response verifies the identity of the user by making an inquiry to a directory (24). Upon successful verification of the user, the certificate authority prompts the user for a first password and the identity of an individual (26) having the authority to vouch for the user. Thereafter, the certificate authority launches an inquiry to the individual identified by the user. Upon successful authentication of the user by the identified individual (26), the certificate authority provides the user with a second password, and thereafter prompts the user for both passwords. After correct receipt from the user of both passwords, the certificate authority provides the user with the credential, and thereafter erases the two passwords.

## Description

### Technical Field

This invention relates to a technique for verifying the authenticity of users on a network.

### Background Art

Many large entities, such as business, schools, governmental units, hospitals, and other organizations, provide their personnel with access to one or more data networks and systems on the data network to enable such personnel to access information, and communicate information among themselves and others. In the course accessing the network or systems, an individual user may require an electronic credential, typically a password that enables the individual to verify his or her identity. Various mechanisms exist for identifying the user for distribution of such credentials but none is free from difficulty. In some cases a shared secret between the user and credential management authority such as Mother's maiden name is used for authentication and subsequent credential issuance, however in many cases the distribution mechanism is itself used for identifying the intended recipient. For example, a sender could choose to transmit the credential to the recipient through a generally secure, non-electronic medium, such as postal mail, or a private courier. While effective, this approach is slow and expensive. Alternatively, the sender could distribute the credential to the recipient in person, thus requiring the presence of both the sender and the recipient at the same location at the same time.

As another option, the sender could send the credential via electronic mail to the recipient. Most electronic mail systems lack stringent security features, making them relatively insecure. Unauthorized individuals can and do intercept or re-direct sensitive electronic mail messages, making electronic mail inappropriate for distribution of sensitive credentials.

Yet, another approach for identifying and distributing sensitive credentials is telephone call back whereby the recipient, after identifying his or her telephone number, will receive a call from the sender. This technique presumes the existence of the credential in some type of database and its previous establishment, which itself may be problematic. Lastly, a user could always fax identification information along with an authorized signature. However, this method requires acceptance of a signature that could be forged.

Thus, there is a need for a technique for establishing the identity of a user that overcomes the disadvantages of the prior art.

### Brief Summary of the Invention

Briefly, the present invention provides a method for authenticating a network user for receipt of an electronic credential. In accordance with the invention, a user initiates the credential request by making such a request to certificate authority (CA), usually via a web page. In practice, the request includes public information such as name, address, phone number, electronic mail address, human resource's ID, etc. In response to the request, the CA prompts the user to: (1) enter a first password, and (2) to identify an individual who can verify the user. Upon receipt of that information from the user, the CA then launches an inquiry to individual identified by the user to verify that individual and to obtain therefrom an authentication of the user. Upon receiving verification from the identified individual, the CA sends the user a second password and thereafter prompts the user for both the first and second passwords. After receipt of both passwords from the user, the CA will thus verify the user's identity, and provide a credential, which may comprise a certificate authenticating the user's identity, or other information, such as a password or a file, for example. Note that the second password may be transmitted by any medium including electronic mail to the user, since it alone can not be used for authentication. Also, the individual identifying the user can not assume the identity of the user, since he or she does not have the knowledge of the first or the second password. Additionally, arbitrarily higher grade of authentication is possible by having more than individual authenticate the user, and increasing the number of passwords required.

### Brief Description of the Drawing

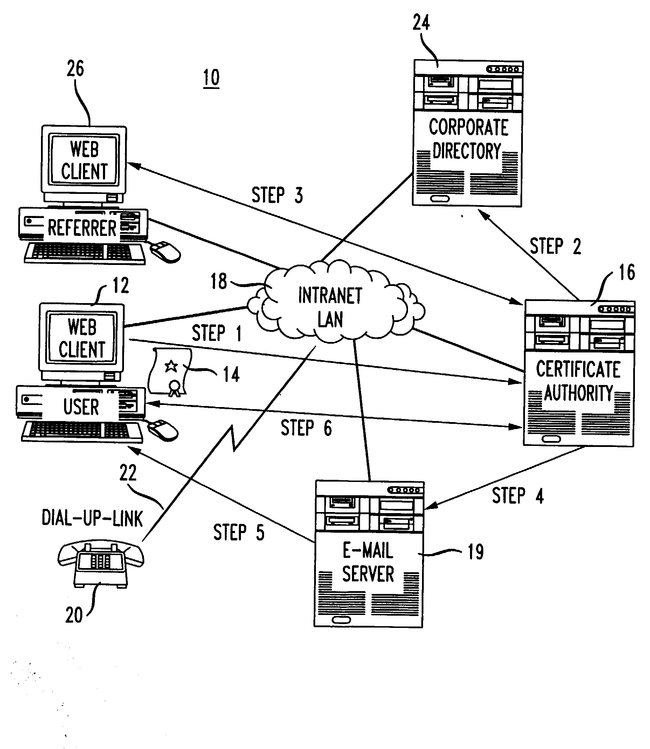

FIGURE 1 shows a block schematic diagram of a network for practicing the verification technique of the invention.

### Detailed Description

FIGURE 1 depicts a communications network for enabling a user 12, represented by terminal, to obtain an electronic credential 14 for verifying the user's identity. In practice, the credential 14 typically may comprise an electronic certificate in accordance with the X.509 standard that authenticates the user. Alternatively, the electronic credential 14 could comprise a password, or an electronic file. To obtain the electronic credential 14, the user 12 first makes a request to a certificate authority 16 (STEP 1) by connecting to a web site through a Local Area Network (LAN) 18. Rather than make the request via a web page, the user 12 could make the request by an electronic mail or by a telephone 20 that communicates to the certificate authority 16 via a dial-up link 22.

Upon receipt of the user's request, the CA 16 obtains some public information about the user for the purposes of subsequent identification by individual 26. In the event the user 12 made the request via electronic mail, the CA 16 undertakes the verification by launching an inquiry to a corporate directory 24 containing a listing of all valid users and their corresponding public information. Alternatively, if the user made the request via the telephone 20, the CA would launch an inquiry to an appropriate entity, such as a Public Switched Telephone Network (PSTN) (not shown) if the call came from outside, or to a PBX (not shown) if the call was internal. By launching an inquiry to the PSTN or to the PBX serving the telephone 20, the CA 16 can obtain additional public information about the user.

Assuming that the CA 16 has gathered needed public information about the user, then as part of the same step, the CA prompts the user for two pieces of information. First, the CA 16 prompts the user 12 for (a) a first password which the user creates. Second, the CA 16 prompts the user 12 for the name or other such identifier of an individual 26 (represented by a computer terminal) that can vouch for the user 12. The individual 26 may comprise anyone in the users chain of management, such as the user's immediate supervisor, or any one having authority over the user. Alternatively, the individual 26 may comprise someone who is responsible for network security and has the authority to issue the credential 14. Note that while the CA 16 will typically prompt the user 12 for the password first, and then the name of the individual 26, the CA can prompt for this information from the user in the reverse order.

Upon receipt from the user 12 of the name or other information identifying the individual 26, the CA 16 launches a query to the identified individual to receive a confirmation therefrom that the user 16 is eligible to receive the credential 14 (STEP 2). In practice, the CA 16 launches the query to the individual 26 via electronic mail, but could do so by telephone. In order to launch a telephone inquiry to the individual 26 via telephone, the CA 16 must possess the ability to initiate a telephone call, as well as the ability to synthesize a spoken message to the individual and the ability to convert any speech from the individual into electrical signals. Note that user 12 may request individual 26 to approach CA 16 to vouch for the user, instead of the CA 16 approaching the individual 26 to vouch the user. In this case the individual 26 may go to a web page, and vouch for the user's identity.

As part of an electronic mail inquiry launched during STEP 2, the CA 16 typically will interrogate the individual 26 to ascertain whether he or she possesses an electronic certificate (not shown) confirming his or her identity. After establishing the existence of the individual's certificate, the CA 16 determines whether the individual's certificate is valid, and the individual 26 indeed has the authority to vouch for the user. While the individual 26 may indeed possess the requisite authority to access the network 18, the individual 26 may not have the authority to approve the user's credential request. Therefore, when interrogating the individual 26, the CA 16 must confirm the individual's own identity as well as the individual's authority to approve the user's credential request in order for the query to return a true value.

If the query launched to the individual 26 returns a true value, then the CA 16 sends an electronic mail message (STEP 4) to the mail server 19 containing a second password. The mail server 19 transmits the second password to the user 12 (STEP 5). Thereafter, the CA 16 prompts the user 12 for both the first and second passwords (STEP 6). If the user 12 is whom her or she claims, the user will know both passwords and can provide them to the CA 16 for verification. Upon receipt of both passwords, the CA 16 provides the desired electronic credential 14. After issuing the credential 14, the CA 16 then deletes both passwords another user from reusing them to fraudulently obtain a credential.

The above-described technique affords several advantages over prior approaches for furnishing credentials. First, the credential distribution technique of the invention is paperless, but yet provides fast authentication while affording the ability for audit. Secondly, the technique of the invention isolates the user 12 from the verifying individual 26 because the individual has no knowledge of either of the two passwords. Thirdly, the technique protects the user 12 from the vulnerability of traditional electronic mail verification techniques. Additionally, the technique of the invention allows for credential distribution using an organization rule-based approval process. Further, the technique of the invention requires no creation of any shared secrets in advance of a credential request by the user. Lastly, the technique of the invention makes use of conventional Public Key infrastructure.

The above-described embodiments merely illustrate the principles of the invention. Those skilled in the art may make various modifications and changes that will embody the principles of the invention and fall within the spirit and scope thereof.

## Claims

1. A method for verifying a user on a network, and upon verification, providing that user wit an electronic credential, comprising the steps of:
(a) receiving in the network a request from the user to receive said electronic credential;
(b) prompting the user for (i) a first password; and (ii) identification of an individual who has authority to authenticate the user;
(c) launching an inquiry to the individual identified by the user to authenticate tat individual and to receive therefrom a verification that the user is authentic, and if the inquiry is successful, then
(d) sending the user a second password; and
(e) prompting the user for entry of both the first and second passwords, and upon correct entry of both, providing the user the electronic credential.

2. The method according to claim 1 wherein the network receives the user's request via a web page.

3. The method according to claim 1 wherein the network receives the user's request via telephone.

4. The method according to claim 3 wherein the network verifies the user by determining whether the user has an authorized telephone number.

5. The method according to claim 1 wherein the network launches an inquiry to the individual identified by the user via electronic mail.

6. The method according to claim 5 wherein the step of launching an inquiry to the identified individual includes the steps of:
(a) establishing whether the individual has an authenticating certificate, and if so, whether the certificate is valid; and
(b) establishing that the individual possesses authority to authenticate the user.

7. The method according to claim 1 wherein the network sends the second password to the user via electronic mail.

8. The method according to claim 1 wherein the network erases both passwords following entry by the user.

9. A method for verifying a user on a network, and upon verification, providing that user with an electronic certificate authenticating the user, comprising the steps of:
(a) receiving in the network a request from the user to receive said certificate;
(b) verifying the identity of the user, and upon verification then
(c) prompting the user for (i) a first password; and (ii) identification of an individual who has authority to authenticate the user;
(d) launching an inquiry to the individual identified by the user to authenticate that individual and to receive therefrom a verification that the user is authentic, and if the inquiry is successful, then
(e) sending the user a second password; and
(f) prompting the user for entry of both the first and second passwords, and upon correct entry of both, providing the user the certificate.

10. The method according to claim 9 wherein the network receives the user's request via electronic mail.

11. The method according to claim 10 wherein the network verifies the user by determining whether the user is an authorized sender of electronic mail.

12. The method according to claim 9 wherein the network launches an inquiry to the individual identified by the user via electronic mail.

13. The method according to claim 12 wherein the step of launching an inquiry to the identified individual includes the steps of:
(a) establishing whether the individual has an authenticating certificate, and if so, whether the certificate is valid; and
(b) establishing that the individual possesses authority to authenticate the user.

14. The method according to claim 10 wherein the network sends the second password to the user via electronic mail.

15. The method according to claim 9 wherein the network erases both passwords following entry by the user.

16. A system for verifying a user on a network, and upon verification, providing that user with an electronic credential, comprising:
a network;
authority means coupled to the network for (1) receiving a request from the user to seeking said electronic credential, and (2) for launching a first inquiry to verify the identity of the user,
directory means coupled to the network and responsive to the first inquiry from the authority means for verifying the user in accordance with the request made thereby for the electronic credential and for providing verification to the authority means;
the authority means, in response to the verification from the directory means, prompting the user for entry of (i) a first password; and (ii) identification of an individual who has authority to authenticate the user; and upon such entry, launching a second inquiry to the individual identified by the user to authenticate that individual and to receive therefrom a verification that the user is entitled to receive the electronic certificate, and if the second inquiry is successful, then sending the user a second password; and thereafter prompting the user for entry of both the first and second passwords, and upon correct entry of both, providing the user the electronic credential; and
an electronic mail system for communicating: (1) the second password from the authority means to the user, both passwords from the user to the authority means, and for electronic credential from the authority means to the user upon successful entry of both passwords by the user.

17. The system according to claim 16 wherein the credential comprises an electronic certificate.

18. The system according to claim 16 wherein the electronic credential comprises a password.

19. The system according to claim 16 wherein the electronic credential comprises an electronic file.
